# EUROPÄISCHE PATENTANMELDUNG

(11) **EP 0 664 620 A2**
(43) Veröffentlichungstag der Anmeldung: **26.07.1995**
(21) Anmeldenummer: 95100506.5
(22) Anmeldetag: 16.01.1995
(51) Int. Cl.: H04B 7/26

(54) **Verfahren und Anordnung zum Übertragen von Sprache in einem Funksystem**

(30) Priorität: 18.01.1994 DE 4401329
(71) Anmelder: SIEMENS AKTIENGESELLSCHAFT, D-80333 München (DE)
(72) Erfinder: Schulz, Dr. Ing. Egon, D-80993 München (DE); Ritter, Dipl. Ing. Gerhard, D-86943 Thaining (DE)

(57) **Zusammenfassung**

Zum Übertragen von Sprache zwischen Teilnehmerstationen eines Funksystems, insbesondere eines Mobilfunksystems, bei dem Sprache durch Sprachrahmen (S) digital codiert wird, werden zunächst die Sprachrahmen (S) in sprachcodierte Sprachrahmen (S1) umgesetzt. Anschließend wird jeweils eine Mehrzahl von diesen Sprachrahmen (S1) zu einem Multi-Sprachrahmen (MSF1) zusammengefaßt. Diese Multi-Sprachrahmen (MSF1) werden fehlergesichert übertragen. Auf der Empfangsseite werden die Multi-Sprachrahmen (MSF4) wieder in sprachcodierte Sprachrahmen (S4) aufgeteilt und anschließend wird die in den übertragenen Sprachrahmen (S') enthaltene digitale Sprachinformation wieder in analoge Sprache umgesetzt.

## Beschreibung

Die Erfindung bezieht sich auf ein Verfahren zum Übertragen von Sprache gemäß dem Oberbegriff des Patentanspruchs 1. Weiterhin bezieht sich die Erfindung auf eine Anordnung zum Durchführen des Verfahrens, sowie auf eine Teilnehmerstation und eine Zentralstation eines entsprechenden Übertragungssystems.

Bei einer Übertragung von Sprache zwischen Teilnehmerstationen eines Funksystems, insbesondere eines Mobilfunksystems ist es allgemein bekannt, auf der Sendeseite analoge Sprachinformation abzutasten und in einem Sprachcodierer in digital codierte Sprachinformation umzusetzen und diese gegebenenfalls fehlergesichert zu übertragen. Auf der Empfangsseite wird die digital codierte Sprachinformation wieder in analoge Sprachinformation umgesetzt und dann als Sprache ausgegeben.

Bei einem Mobilfunksystem ist üblicherweise eine zu versorgende Fläche in eine große Anzahl von Funkzellen eingeteilt. In den Zellen sind jeweils Basisstationen vorgesehen, über die die Verbindungen zwischen einem öffentlichen Telefonnetz und den Mobilfunkgeräten der einzelnen Teilnehmer in der jeweiligen Zelle hergestellt werden können. Ein derartiges Mobilfunksystem ist beispielsweise das vom European Telecommunication Standards Institute (ETSI) standardisierte GSM (Global System for Mobile Communication). Ein derartiges System ist aus einer Druckschrift der Siemens AG: D900 Mobile Communication System, System Description, 1992 oder aus einer Druckschrift BOEHM, M., SCHALLER, W.: Mobilfunksystem CD 900 Funk-Technik 411, H. 4, 1986, S. 150 bis 153 bekannt. Ein ähnliches System ist das DCS 1800/PCN.

Beim GSM wird die Sprache an der Schnittstelle zwischen den Basisstationen und den Mobilfunkgeraten durch digital codierte Signale übertragen. Dabei wird ein Codierungsalgorithmus für die Sprache verwendet, der eine Datenkompression um den Faktor acht auf 13 kbit/s durchgeführt.

Um den Datenstrom vor Störungen auf dem Funkkanal zu schützen, wird ein Fehlerkorrekturverfahren verwendet, bei dem mittels Kanalcodierung der zu übertragenden Information, Redundanz hinzugefügt wird. Durch diese Kanalcodierung erhöht sich dann die Sprachdatenrate von 13 kbit/s auf 22,8 kbit/s.

Um einerseits zufällige Bitfehler und andererseits Bündelfehler des Übertragungskanals korrigieren zu können, werden außerdem die zu übertragenden Daten verschachtelt (interleaved). Sie werden in Subblöcke zerlegt und übertragen. Auf der Empfangsseite werden die Subblöcke gesammelt und ent schachtelt (deinterleaved). Danach werden die Daten einer Fehlerkorrektureinrichtung zugeführt, die eine Fehlerkorrektur der empfangenen Daten durchführt, und die auf der Sendeseite hinzugefügte Redundanz wird entfernt. Die so erhaltenen Daten werden dem Sprachdecodierer zugeführt, und dieser rekonstruiert die linear quantisierten Abtastwerte. Ein nachgeschalteter Digital-Analog-Umsetzer formt die digitalen Signale wieder in analoge Sprache um.

Die für die Übertragung eines Sprachrahmens von 20 ms von einem Mobilfunknehmer zu einem Festnetzteilnehmer oder umgekehrt benötigte Zeit beträgt etwa 90 ms. Bei einer Sprachübertragung von einem Mobilfunkteilnehmer zu einem anderen Mobilfunkteilnehmer verdoppelt sich diese Verzögerungszeit und beträgt ungefähr 180 ms.

Aus der EP 04 44 592 A2 ist es ebenfalls bekannt, Sprachrahmen von M Teilnehmern in einem Rahmen mit N Kanälen eines Mobilfunksystems zu übertragen.

Durch diese hohe Verzögerungszeit kann jedoch die Qualität der übertragenen Sprache durch Echos leiden.

Zur Verbesserung der Qualität der Sprachübertragung ist es wichtig, diese Verzögerungszeit zu reduzieren. Es wäre denkbar, die zu übertragenden kanalcodierten Sprachrahmen in einer kleineren Anzahl von Teilblöcken zu übertragen, wobei dann die Anzahl der Bits in den Teilblöcken vergrößert wird. Bei diesem Verfahren gehen jedoch im Fall von Störungen auf dem Mobilfunkkanal zu viele Bits verloren, d.h. das Fehlerschutzverfahren ist bei gleichbleibender Datenrate nicht ausreichend.

Der Erfindung liegt die Aufgabe zugrunde, ein Verfahren und eine Anordnung anzugeben, bei deren Verwendung die Verzögerungszeit bei der Sprachübertragung wesentlich verringert wird und bestehende Mobilfunksysteme nur unwesentlich abgeändert werden müssen. Weiterhin liegt der Erfindung die Aufgabe zugrunde, eine entsprechende Teilnehmerstation und eine entsprechende Zentralstation anzugeben.

Erfindungsgemäß wird die Aufgabe bei dem Verfahren der eingangs genannten Art durch die im kennzeichnenden Teil des Patentanspruchs 1 angegebenen Merkmale gelöst. Eine Anordnung gemäß der Erfindung ist im Patentanspruch 18 angegeben. Eine entsprechende Teilnehmerstation und Zentralstation ist in den Ansprüchen 19 bzw. 20 angegeben.

Das Verfahren und die Anordnung gemäß der Erfindung haben den Vorteil, daß die Sprachqualität wesentlich verbessert wird. Weiterhin haben sie den Vorteil, daß ein bestehendes Mobilfunksystem ohne wesentliche Änderungen benutzt werden kann. Im Hochfrequenzteil sind keinerlei Änderungen erforderlich.

Lediglich in dem die Codierungen beteffenden Teilen sind Anpassungen erforderlich.

Vorteilhafte Ausgestaltungen der Erfindung sind in den Unteransprüchen angegeben.

Ein Ausführungsbeispiel der Erfindung wird im folgenden anhand von Zeichnungen näher erläutert. Es zeigen:
Fig. 1 ein Blockbild eines bekannten Mobilfunksystems,
Fig. 2 ein Blockbild eines bekannten Sprach- und Kanalcodiersystems und Sprach-und Kanaldecodiersystems,
Fig. 3 eine schematische Darstellung einer bekannten Kanalcodierung,
Fig. 4 ein Blockbild eines erfindungsgemäßen Kanalcodierungssystems, und
Fig. 5 eine schematische Darstellung der erfindungsgemäßen Kanalcodierung.

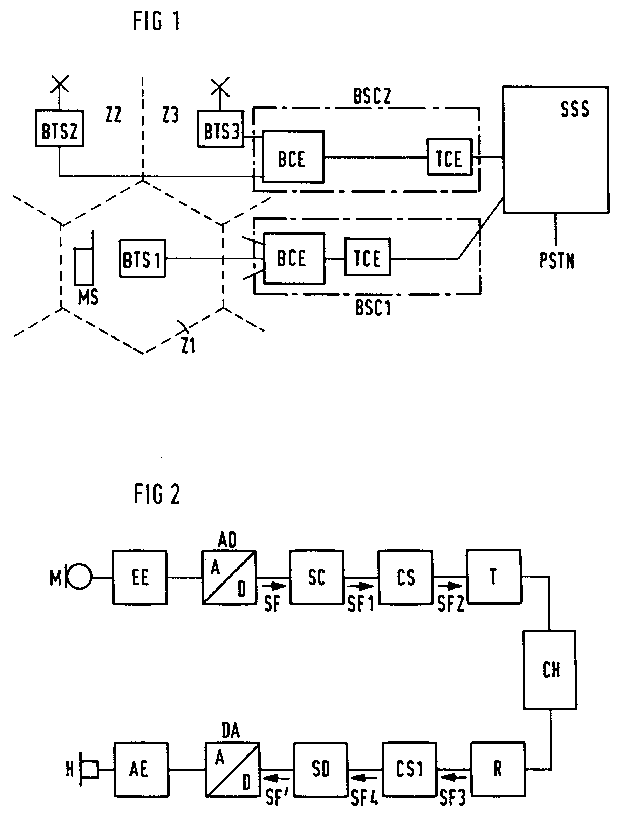

Bei dem in Fig. 1 dargestellten Mobilfunksystem ist ein Funkbereich eines entsprechend dem sog. GSM-Standard (GSM = Global System for Mobile Communication) arbeitenden Mobilfunksystems in mehrere Zellen Z aufgeteilt, von denen in Fig. 1 nur die Zellen Z1 bis Z3 bezeichnet sind. In einer derartigen Zelle Z wird der Telekommunikationsdienst von und zu einer Mobilstation MS durch eine Basisstation BTS bereitgestellt (BTS = Base Transceiver Station). In der Fig. 1 sind lediglich die den Zellen Z1 bis Z3 zugeordneten Basisstationen BTS1 bis BTS3 dargestellt. Eine oder mehrere Basisstationen BTS sind mit einer Basis-Steuereinheit BSC (BSC = Base Station Controller) verbunden, von denen in Fig. 1 nur die Basis-Steuereinheiten BSC1 und BSC2 dargestellt sind. Die Steuereinheiten BSC führen die lokalen Funktionen der Rufvermittlung, Überwachung und Wartung durch. Sie umfassen Steuereinheiten BCE (Base Station Control Equipment) und Codeumsetzer TCE (Transcoding Equipment). Mehrere Basis-Steuereinheiten BSC sind mit einer Vermittlungseinrichtung SSS (SSS = Switching Subsystem) verbunden, die ihrerseits mit dem öffentlichen Netz PSTN (PSTN = Public Switched Telefone Network) verbunden ist, das als ISDN-Netz, als Mobilfunknetz oder als sonstiges Telefon- oder Datennetz ausgebildet sein kann.

Falls ein Teilnehmer mit der als Teilnehmerstation dienenden Mobilstation MS in der Zelle Z1 mit einem anderen Teilnehmer kommunizieren will, so wird über die Basisstation BTS1 mit der Basis-Steuereinheit BSC1 ein vorgegebenes Protokoll abgewickelt, das beispielsweise in dem obengenannten GSM-Standard festgelegt ist. Wenn die Verbindung zwischen der Mobilstation MS und der Basis-Steuereinheit BSC1 hergestellt ist, wird über die Vermittlungseinrichtung SSS eine Verbindung zum öffentlichen Netz PSTN hergestellt. Von diesem aus wird dann der andere Teilnehmer, der wiederum mit einer Mobilstation versehen sein kann, erreicht.

Bei dem in Fig. 2 dargestellten Blockbild eines Sprach- und Kanalcodiersystems sowie eines entsprechenden Decodiersystems wandelt ein an einer Eingabeeinheit EE angeschlossenes Mikrofon M die Sprache in analoge Sprachsignale um, die einem Analog-Digital-Umsetzer AD zugeführt werden. Der Analog-Digital-Umsetzer AD setzt die analogen Sprachsignale in Abtastwerte darstellende digitale Codewörter um. Die Abtastrate beträgt beispielsweise 8 kHz und die Codewörter geben die Abtastwerte mit z.B. 13 Bit linear quantisiert wieder, so daß am Ausgang des Analog-Digital-Umsetzers AD eine Datenrate von 104 Kbit/s vorliegt und es werden Sprachrahmen SF, bestehend aus jeweils 160 aufeinanderfolgenden Codewörtern, gebildet. Die Sprachrahmen SF entsprechen somit einer Sprache von 160·1/8000 s = 20 ms und enthalten 160·13 Bits = 2080 Bits. Dem Analog-Digital-Umsetzer AD ist ein Sprachcodierer SC nachgeschaltet, der beispielsweise nach dem RPE-LTP(Regular Pulse Excitation-Long Term Prediction)-Verfahren arbeitet. Der Sprachcodierer SC codiert jeden digitalisierten 20 ms-Sprachrahmen SF in einen sprachcodierten Sprachrahmen SF1 von 260 Bits und gibt diese Sprachrahmen SF1 mit einer Rate von 50/s ab. Durch den Sprachcodierer SC wird somit eine Datenkompression von 104 kbit/s auf 13 kbit/s, d.h. um den Faktor 8 durchgeführt.

Beim GSM wird die Sprache an der Schnittstelle zwischen der jeweiligen Basisstation BTS und dem Mobilfunkgerät MS durch digital codierte Signale übertragen. Um die digital codierten Signale vor Störungen auf dem Funkkanal zu schützen, wird in einer Codierstufe CS ein Fehlerkorrekturverfahren verwendet, das als Vorwarts-Fehlerkorrekturverfahren (Forward Error Correction (FEC)) bezeichnet wird. Bei diesem Verfahren wird mittels einer Kanalcodierung der zu übertragenden Information, d.h. der Sprachdaten in Form der sprachcodierten Sprachrahmen SF1, zur Erkennung und/oder Korrektur von Fehlern, Redundanz hinzugefügt. Beim GSM wird auf die Bits der Sprachdaten ein ungleich gewichtetes Fehlerschutzverfahren (Unequal Error Protection (UEP)) angewendet, d.h. die wichtigen Bits erhalten zum Schutz gegen Störungen mehr Redundanz und die weniger wichtigen Bits erhalten weniger Redundanz oder gar keine. Jedem sprachcodierten 20 ms-Sprachrahmen SF1, bestehend aus 260 Bits, werden zum Schutz gegen die Störungen hierzu 196 Bits Redundanz hinzugefügt, und der zu übertragende Sprachrahmen SF2 enthält dann 456 Bits. Durch diese Kanalcodierung erhöht sich dann die Sprachdatenrate von 13 kbit/s auf 22,8 kbit/s.

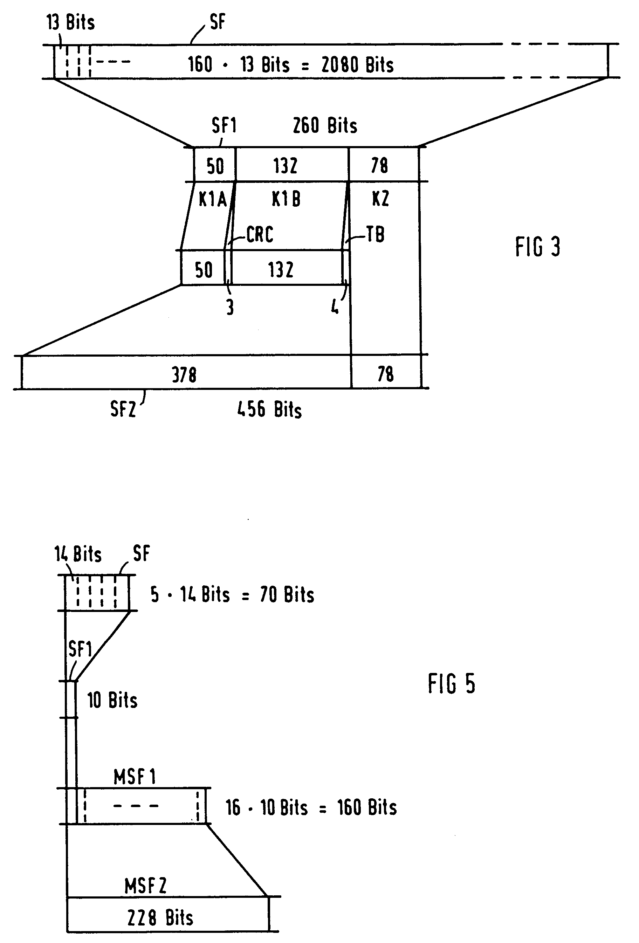

Bei der in Fig. 3 gezeigten bekannten Kanalcodierung werden die jeweils alle 20 ms abgegebenen sprachcodierten Sprachrahmen SF1 mit jeweils 260 Bits in drei Klassen K1A, K1B und K2 mit 50, 132 bzw. 78 Bits eingeteilt. Den 50 Bits der Klasse K1A werden durch die Codierstufe CS drei Paritätsbits CRC hinzugefügt, wahrend den 132 Bits der Klasse K1B vier Füllbits TB hinzugefügt werden. Die sich auf diese Weise ergebenden 189 Bits werden der Codierstufe CS zugeführt, die entsprechend einem Faltungscode (Convolutional Code) Blöcke mit jeweils 378 Bits erzeugt. Die 78 Bits der Klasse K2 bleiben unverändert und werden hinzugefügt, so daß sich jeweils der zu übertragende Sprachrahmen SF2 mit den genannten 456 Bits ergibt.

Um einerseits zufällige Bitfehler und andererseits Bündelfehler des Übertragungskanals korrigieren zu können, werden die zu übertragenden Sprachrahmen SF2 in der Sendeeinrichtung T auseinandergezogen. Dabei werden die Daten verschachtelt (interleaved). Sie werden in acht Subblöcke mit je 57 Bits zerlegt, und je ein Subblock wird innerhalb von 4,615 ms übertragen. Die zu übertragenden Daten können noch verschlüsselt werden, bevor sie in einem Multiplexer verarbeitet und über die Übertragungsstrecke CH übertagen werden.

Auf der Empfangsseite werden die übertragenen Daten in einer Empfangseinrichtung R in einem Demultiplexer verarbeitet, entschlüsselt und die acht Subblöcke werden gesammelt und entschachtelt (de-interleaved). Danach werden die 456 Bits als Sprachrahmen SF3 einer Fehlerkorrektureinrichtung CS1 zugeführt, die eine Fehlerkorrektur der übertragenen Daten durchführt, und die auf der Sendeseite hinzugefügte Redundanz wird entfernt. Die so erhaltenen Sprachrahmen SF4 mit jeweils 260 Bits werden dem Sprachdecodierer SD zugeführt, und dieser rekonstruiert den Sprachrahmen SF' mit den 160 mit jeweils 13 Bits linear quantisierten Codewörtern. Ein nachgeschalteter Digital-Analog-Umsetzer DA erzeugt aus den Codewörtern wieder analoge Sprachsignale und gibt diese über eine Ausgabeeinheit AE an einer Wiedergabeeinheit H aus.

Die für die Übertragung eines Sprachrahmens von 20 ms von einem Mobilfunknehmer zu einem Festnetzteilnehmer oder umgekehrt benötigte Zeit betragt etwa 90 ms und setzt sich in etwa wie folgt zusammen:

| | |
|---|---|
| Sprachrahmen | 20,0 ms |
| Übertragung der Teilblöcke | 37,5 ms |
| Signalverarbeitungszeit | 27,5 ms |
| Übertragungszeit (terrestrisch) | 5.0 ms |
| Totale Verzögerungszeit | 90,0 ms |

Bei einer Sprachübertragung von einem Mobilfunkteilnehmer zu einem anderen Mobilfunkteilnehmer verdoppelt sich die Verzögerungszeit und beträgt ungefähr 180 ms (2x90 ms).

Durch diese hohe Verzögerungszeit kann die Qualität der übertragenen Sprache durch Echos leiden.

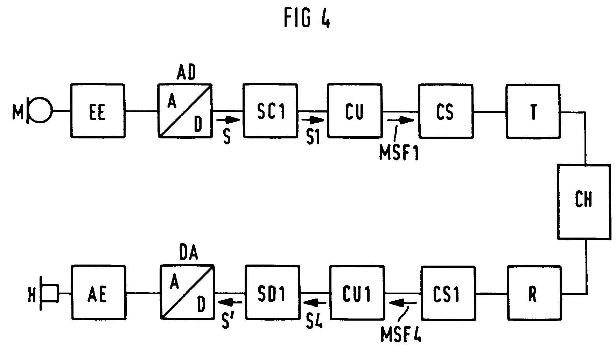

Bei dem in Fig. 4 dargestellten Blockbild, das teilweise dem in Fig. 2 dargestellten Blockbild entspricht, verwendet der Sprachcodierer SC1 einen Algorithmus, der in der ITU Recommendation G.728 ("Coding of Speech at 16 kbit/s Low Delay-Code Excited Linear Prediction (LDF-CELP)") definiert ist. Dem sprachcodierer SC1 ist eine Steuereinheit CU nachgeschaltet, die jeweils mehrere vom Sprachcodierer SC1 abgegebene Sprachrahmen S1 zu einem Multi-Sprachrahmen MSF1 zusammenfügt. Dieser kann dann in entsprechender Weise wie bei der aus Fig. 2 bekannten Anordnung verarbeitet werden. Auf der Empfangsseite ist dem entspechenden Sprachdecodierer SD1 eine Steuereinheit CU1 vorgeschaltet, die den Multi-Sprachrahmen MSF4 wieder in entsprechende Sprachrahmen S4 zerlegt. Diese Sprachrahmen S4 werden in dem Sprachdecodierer SD wieder in Sprachrahmen S' umgesetzt, die den Sprachrahmen S entsprechen. Anschließend setzt der Digital-Analog-Wandler DA die Codewörter der Sprachrahmen S' wieder in analoge Sprachsignale um, die über die Ausgabeeinheit AE an der Wiedergabeeinheit H ausgegeben werden.

Die in der Darstellung in Fig. 5 gezeigten, vom Sprachcodierer SC1 abgegebenen Sprachrahmen S bestehen in diesem Fall aus fünf Codewörtern, die den Abtastwerten zugeordnet sind, wobei jeder Abtastwert mit 14 Bits linear quantisiert ist. Die Abtastrate beträgt 8000/s. Somit beträgt die Dauer eines Sprachrahmens S 0,625 ms (5x0,125 ms). Für jeden Sprachrahmen S, bestehend aus fünf Codewörtern, liefert der 16 kbit/s LD-CELP Sprachcodierer SC einen sprachcodierten Sprachrahmen S1 bestehend aus 10 Bits. Dies bedeutet, daß der Sprachcodierer SC1 Sprachrahmen S mit einer Länge von 0,625 ms verarbeitet. Die Verarbeitungszeit eines Sprachrahmens S des 16 kbit/s LD-CELP Sprachcodierers SC beträgt etwa nur 2 ms.

Eine Mehrzahl von sprachcodierten Sprachrahmen S1, bestehend aus 10 Bits lassen sich nun zu einem Multi-Sprachrahmen MSF1 zusammenzufassen. Faßt man z.B. 16 Sprachrahmen S1 zu einem Multi-Sprachrahmen MSF1 zusammen, dann enthält der Mult-Sprachrahmen MSF1 160 Bits und dies entspricht einem Sprachintervall von 10 ms (16x0,625 ms). Mittels der Kanalcodierung fügt man diesem Multi-Sprachrahmen MSF1 68 Bits fehlererkennende und/oder fehlerkorrigiende Redundanz hinzu und der kanalcodierte Multi-Sprachrahmen MSF2 für 10 ms Sprache hat dann 228 Bits. Diesen Multi-Sprachrahmen MSF2 zerlegt man, entsprechend dem in Fig. 2 dargestellten bekannten Übertragungsverfahren in vier Teilblöcke bestehend aus jeweils 57 Bits und übertragt pro 4,615 ms einen Teilblock. Durch die Anwendung dieses Verfahrens reduziert sich damit die Verzögerungszeit für die Sprachübertragung auf über 50 ms, nämlich

| | |
|---|---|
| Sprachrahmen | 10,0 ms |
| Übertragung der Teilblöcke | 18,0 ms |
| Signalverarbeitungszeit | 2,0 ms |
| Übertragungszeit (terrestrisch) | 5,0 ms |
| Totale Verzögerungszeit | 35,0 ms |

Es lassen sich auch kleinere oder größere Multi-Sprachrahmen MSF1 bilden. Ein 20 ms Multi-Sprachrahmen MSF1 besteht aus 320 Bits bzw. 32 LD-CELP Sprachrahmen S1. Ein 5 ms Multi-Sprachrahmen MSF1 besteht aus acht Sprachrahmen S1 bzw. 80 Bits und ein 2,5 ms Multi-Sprachrahmen MSF1 besteht aus 40 Bits bzw. aus vier Sprachrahmen S1.

Während Sprachpausen müssen nicht alle Multi-Sprachrahmen MSF übertragen werden. Es können dann entweder keine oder nur vereinzelte, d.h. ein oder wenige Multi-Sprachrahmen MSF übertragen werden. Falls nur vereinzelte Multi-Sprachrahmen MSF übertragen werden, werden mit diesen charakteristische Merkmale, insbesondere Hintergrundgeräusche, übertragen. Auf der Empfangsseite werden dann aus den vereinzelt übertragenen Multi-Sprachrahmen entsprechende Hintergrundgeräusche erzeugt.

Es ist auch möglich, die Anzahl der sprachcodierten Sprachrahmen S1 in einem Funksystem, beispielsweise dem Mobilfunksystem, zu verändern. Diese Veränderung kann in Abhängigkeit von der Qualität der Übertragung in den verschiedenen Übertragungsbereichen, d.h. insbesondere innerhalb der verschiedenen Zellen Z erfolgen. Ab einer vorgegebenen Anzahl kann auch ein Auslösen der Verbindung erfolgen oder eine Übertragung über einen anderen Übertragungskanal, z.B. über eine andere Zelle Z erfolgen (Handover). Es ist auch möglich, die Anzahl dynamisch oder quasistatisch zu verändern. Hierzu wird z.B. in der Zelle Z der Mobilstation MS mitgeteilt, welche Anzahl sie für eine oder mehrere Übertragungen benutzen soll.

Das Zusammenfassen von mehreren sprachcodierten Sprachrahmen S1 zu einem Multi-Sprachrahmen MSF1 kann nicht nur bei Mobilfunksystemen, sondern auch bei anderen Funksystemen oder bei leitungsgebundenen Systemen in vorteilhafter Weise eingesetzt werden.

## Patentansprüche

1. Verfahren zum Übertragen von Sprachinformation zwischen Teilnehmerstationen eines Funksystems, bei dem analoge Sprachinformation durch Sprachrahmen (S) digital codiert wird, bei dem die Sprachrahmen (S) in sprachcodierte Sprachrahmen (S1) umgesetzt werden, bei dem diese sprachcodierten Sprachrahmen (S1) fehlergesichert über mindestens einen Übertragungskanal (CH) übertragen werden und bei dem anschließend die in den übertragenen Sprachrahmen enthaltene digitale Sprachinformation nach einer Sprachdecodierung wieder in analoge Sprachinformation umgesetzt wird,
**dadurch gekennzeichnet,**
daß auf der Sendeseite jeweils eine Mehrzahl von einem Teilnehmer zugeordneten sprachcodierten Sprachrahmen (S1) zu einem Multi-Sprachrahmen (MSF1) zusammengefaßt wird und daß auf der Empfangsseite die Multi-Sprachrahmen (MSF4) wieder in sprachcodierte Sprachrahmen (S4) aufgeteilt werden.

2. Verfahren nach Anspruch 1,
**dadurch gekennzeichnet,**
daß die Multi-Sprachrahmen (MSF1) unter Verwendung des an sich bekannten Verfahrens des ungleich gewichteten Fehlerschutzverfahrens (Unequal Error Protection (UEP)) fehlergesichert übertragen werden.

3. Verfahren nach Anspruch 1 oder Anspruch 2,
**dadurch gekennzeichnet,**
daß die Übertragung der einzelnen Multi-Sprachrahmen (MSF1) durch Aufteilung auf jeweils mehrere Teilblöcke erfolgt, die getrennt voneinander übertragen werden.

4. Verfahren nach Anspruch 3,
**dadurch gekennzeichnet,**
daß die Teilblöcke verschlüsselt übertragen werden.

5. Verfahren nach einem der Ansprüche 1 bis 4, **dadurch gekennzeichnet,**
daß für mindestens einen vorgegebenen Übertragungsbereich die Anzahl der zu einem Multi-Sprachrahmen (MSF1) zusammengefaßten Sprachrahmen (S1) festgelegt wird.

6. Verfahren nach einem der Ansprüche 1 bis 5,
**dadurch gekennzeichnet,**
daß den Teilnehmerstationen die Anzahl der zu einem Multi-Sprachrahmen (MSF1) zusammengefaßten Sprachrahmen (S1) mitgeteilt wird.

7. Verfahren nach einem der Ansprüche 1 bis 6,
**dadurch gekennzeichnet,**
daß den Teilnehmerstationen der Algorithmus zum Zusammenfassen der Sprachrahmen (S1) zu einem Multi-Sprachrahmen (MSF1) und zum Hinzufügen der Redundanz mitgeteilt wird.

8. Verfahren nach einem der Ansprüche 1 bis 7,
**dadurch gekennzeichnet,**
daß den Teilnehmerstationen eine Veränderung der Anzahl der zu einem Multi-Sprachrahmen (MSF1) zusammengefaßten Sprachrahmen (S1) mitgeteilt wird.

9. Verfahren nach einem der Ansprüche 1 bis 8,
**dadurch gekennzeichnet,**
daß die Festlegung der Anzahl der zu einem Multi-Sprachrahmen (MSF1) zusammengefaßten Sprachrahmen (S1) in Abhängigkeit von der Qualität der Übertragung erfolgt.

10. Verfahren nach einem der Ansprüche 3 bis 9,
**dadurch gekennzeichnet,**
daß die Festlegung der Anzahl der Teilblöcke, in die ein Multi-Sprachrahmen (MSF1) aufgeteilt wird, in Abhängigkeit von der Qualität der Übertragung erfolgt.

11. Verfahren nach einem der Ansprüche 1 bis 10,
**dadurch gekennzeichnet,**
daß die Übertragung beendet wird, wenn die Anzahl der zu einem Multi-Sprachrahmen (MSF1) zusammengefaßten Sprachrahmen (S1) einen vorgegebenen Wert überschreitet.

12. Verfahren nach einem der Ansprüche 1 bis 11,
**dadurch gekennzeichnet,**
daß die Übertragung über einen anderen Übertragungskanal erfolgt, wenn die Anzahl der zu einem Multi-Sprachrahmen (MSF1) zusammengefaßten Sprachrahmen (S1) einen vorgegebenen Wert überschreitet.

13. Verfahren nach einem der Ansprüche, 1 bis 12,
**dadurch gekennzeichnet,**
daß die Übertragung der Multi-Sprachrahmen (MSF1) in einem Mobilfunknetz erfolgt.

14. Verfahren nach einem der Ansprüche 1 bis 12,
**dadurch gekennzeichnet,**
daß die Übertragung der Multi-Sprachrahmen (MSF1) streckenweise in einem leitungsgebundenen Netz erfolgt.

15. Verfahren nach einem der vorangehenden Ansprüche,
**dadurch gekennzeichnet,**
daß während Sprachpausen keine Multi-Sprachrahmen (MSF) übertragen werden.

16. Verfahren nach einem der Ansprüche 1 bis 14,
**dadurch gekennzeichnet,**
daß während Sprachpausen nur vereinzelt Multi-Sprachrahmen (MSF) übertragen werden, mittels denen Hintergrundgeräusche darstellbar sind.

17. Verfahren nach Anspruch 16,
**dadurch gekennzeichnet,**
daß mittels der einzelnen Multi-Sprachrahmen auf der Empfangsseite Hintergrundgeräusche erzeugbar sind.

18. Anordnung zum Übertragen von Sprachinformation zwischen Teilnehmerstationen eines Funksystems, bei dem analoge Sprachinformation in Form von Sprachrahmen (S) digital codiert wird, bei dem die Sprachrahmen (S) in in einem Sprachcodierer (SC1) in sprachcodierte Sprachrahmen (S1) umgesetzt werden, bei dem diese sprachcodierten Sprachrahmen (S1) fehlergesichert über mindestens einen Übertragungskanal (CH) übertragen werden und bei dem anschließend die in den übertragenen Sprachrahmen enthaltene digitale Sprachinformation mittels eines Sprachdecodierers (SD) wieder in analoge Sprachinformation umgesetzt wird,
**dadurch gekennzeichnet,**
daß auf der Sendeseite dem Sprachcodierer (SC1) eine Steuereinheit (CU) nachgeschaltet ist, die jeweils eine Mehrzahl von einem Teilnehmer zugeordneten sprachcodierten Sprachrahmen (S1) zu einem Multi-Sprachrahmen (MSF1) zusammenfaßt und daß auf der Empfangsseite dem Sprachdecodierer (SD1) eine weitere Steuereinheit (CU1) vorgeschaltet ist, die die Multi-Sprachrahmen (MSF4) wieder in sprachcodierte Sprachrahmen (S4) aufteilt.

19. Teilnehmerstation zum Übertragen von Sprachinformation von und/oder zu einer Zentralstation eines Funksystems, bei dem analoge Sprachinformation in Form von Sprachrahmen (S) digital codiert wird, bei dem die Sprachrahmen (S) in einem Sprachcodierer (SC1) in sprachcodierte Sprachrahmen (S1) umgesetzt werden, bei dem diese sprachcodierten Sprachrahmen (S1) fehlergesichert über mindestens einen Übertragungskanal (CH) übertragen werden und bei dem anschließend die in den übertragenen Sprachrahmen enthaltene digitale Sprachinformation mittels eines Sprachdecodierers (SD1) wieder in analoge Sprachinformation umgesetzt wird,
**dadurch gekennzeichnet,**
daß dem Sprachcodierer (SC1) eine Steuereinheit (SU) nachgeschaltet ist, die jeweils eine Mehrzahl von einem Teilnehmer zugeordneten sprachcodierten Sprachrahmen (S1) zu einem Multi-Sprachrahmen (MSF1) zusammenfaßt und daß dem Sprachdecodierer (SD1) eine weitere Steuereinheit (CU1) vorgeschaltet ist, die die Multi-Sprachrahmen (MSF4) wieder in sprachcodierte Sprachrahmen (S4) aufteilt.

20. Zentralstation zum Übertragen von Sprachinformation von und/oder zu einer Teilnehmerstation eines Funksystems, bei dem analoge Sprachinformation in Form von Sprachrahmen (S) digital codiert wird, bei dem die Sprachrahmen (S) in einem Sprachcodierer (SC1) in sprachcodierte Sprachrahmen (S1) umgesetzt werden, bei dem diese sprachcodierten Sprachrahmen (S1) fehlergesichert über mindestens einen Übertragungskanal (CH) übertragen werden und bei dem anschließend die in den übertragenen Sprachrahmen enthaltene digitale Sprachinformation mittels eines Sprachdecodierers (SD1) wieder in analoge Sprachinformation umgesetzt wird,
**dadurch gekennzeichnet,**
daß dem Sprachcodierer (SC1) eine Steuereinheit (SU) nachgeschaltet ist, die jeweils eine Mehrzahl von einem Teilnehmer zugeordneten sprachcodierten Sprachrahmen (S1) zu einem Multi-Sprachrahmen (MSF1) zusammenfaßt und daß dem Sprachdecodierer (SD1) eine weitere Steuereinheit (CU1) vorgeschaltet ist, die die Multi-Sprachrahmen (MSF4) wieder in sprachcodierte Sprachrahmen (S4) aufteilt.
